(19) Europäisches Patentamt / European Patent Office / Office européen des brevets

(11) **EP 4 379 853 A1**

(12) **EUROPEAN PATENT APPLICATION**
published in accordance with Art. 153(4) EPC

(43) Date of publication:
**05.06.2024 Bulletin 2024/23**

(21) Application number: **23749979.3**

(22) Date of filing: **03.02.2023**

(51) International Patent Classification (IPC):
$H01M\ 4/134^{(2010.01)}$   $H01M\ 4/04^{(2006.01)}$
$H01M\ 4/62^{(2006.01)}$   $H01M\ 10/052^{(2010.01)}$
$H01M\ 4/02^{(2006.01)}$

(52) Cooperative Patent Classification (CPC):
H01M 4/02; H01M 4/04; H01M 4/134;
H01M 4/1395; H01M 4/62; H01M 4/66;
H01M 10/052; H01M 10/0525; Y02E 60/10

(86) International application number:
**PCT/KR2023/001579**

(87) International publication number:
**WO 2023/149746 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.02.2022 KR 20220014548**

(71) Applicant: **LG ENERGY SOLUTION, LTD.**
**Seoul 07335 (KR)**

(72) Inventors:
• **JOO, Mun Kyu**
  **Daejeon 34122 (KR)**

• **LEE, Ilha**
  **Daejeon 34122 (KR)**
• **KIM, Sarah**
  **Daejeon 34122 (KR)**
• **JEON, Seoyoung**
  **Daejeon 34122 (KR)**
• **KWON, Yohan**
  **Daejeon 34122 (KR)**
• **CHAE, Jonghyun**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING ANODE FOR LITHIUM SECONDARY BATTERY, ANODE FOR LITHIUM SECONDARY BATTERY, AND LITHIUM SECONDARY BATTERY COMPRISING ANODE**

(57)   Disclosed is a manufacturing method of a negative electrode for a lithium secondary battery, a negative electrode for a lithium secondary battery, and a lithium secondary battery including a negative electrode.

[Figure 1]

**Description**

[Technical Field]

The present application claims priority to and the benefit of Korean Patent Application No. 10-2022-0014548 filed in the Korean Intellectual Property Office on February 4, 2022, the entire contents of which are incorporated herein by reference.

The present application relates to a manufacturing method of a negative electrode for a lithium secondary battery, a negative electrode for a lithium secondary battery, and a lithium secondary battery including the negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-containing particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-containing materials have attracted attention due to their low cost and high capacity (4200 mAh/g).

However, when a silicon-containing negative electrode active material is used, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-containing negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon negative electrode including a silicon-containing negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

However, in order to use the existing electrochemical method, the wet process should be performed within the electrolyte, which poses risks such as fire and explosion, so it was necessary to control an inert environment well. That is, when creating the environment, it is difficult to control conditions such as moisture control by using inert gas in a room where the electrochemical method is performed. In addition, in order to uniformly control the initial irreversible capacity, a rate of pre-lithiation should be slowed down as much as possible using an electrochemical method, so a problem arises in that the production cost increases in the application of the electrochemical method.

In addition, in a lithium metal transfer process of the pre-lithiation process, it is difficult to transfer lithium metal safely and easily, and lithium is not transferred from a transfer laminate, or even if lithium metal is transferred, the highly reactive lithium metal immediately starts reacting with an electrode active material, thereby causing problems such as particle breakage on a surface of an electrode active material layer.

Therefore, it is necessary to research a process condition and a material with which it is possible to easily transfer lithium metal on top of an electrode active material layer during a lithium metal transfer process, and to uniformly pre-lithiate lithium in the electrode active material layer in a more safe and efficient manner when pre-lithiating an electrode.

Citation List

(Patent Literature 1) Japanese Patent Application Publication No. 2009-080971

[Detailed Description of the Invention]

[Technical Problem]

In the pre-lithiation process, the transfer process of lithium metal includes a process of transferring a lithium metal layer from a transfer laminate to a top of an electrode active material layer. In this case, it has been found through research that a degree of transfer of lithium metal can be controlled if a surface property of a negative electrode is adjusted in order to facilitate the transfer of the lithium metal layer on the transfer laminate to a top of a negative electrode active material layer (or a negative electrode active material layer having a buffer layer laminated thereon).

Accordingly, the present application relates to a manufacturing method of a negative electrode for a lithium secondary battery, a negative electrode for a lithium secondary battery, and a lithium secondary battery including a negative electrode.

[Technical Solution]

An exemplary embodiment of the present specification provides a manufacturing method of a negative electrode for a lithium secondary battery, the manufacturing method including: forming a negative electrode by forming a negative electrode active material layer on one surface or both surfaces of a negative electrode current collector layer; pretreating the negative electrode; transferring a lithium metal layer to the pretreated negative electrode; and activating the lithium metal layer, in which the pretreating is performed using a plasma treatment or corona treatment.

Another exemplary embodiment provides a negative electrode for a lithium secondary battery, the negative electrode including: a negative electrode current collector layer; and a negative electrode active material layer on one surface or both surfaces of the negative electrode current collector layer, in which the negative electrode for a lithium secondary battery satisfies Equation 1 below.

$$[Equation\ 1]$$

$$10°≤A-B≤60°$$

in Equation 1,

'A' refers to a water contact angle on a surface of the negative electrode before pretreatment of the negative electrode, and
'B' refers to a water contact angle on the surface of the negative electrode after pretreatment of the negative electrode.

Still another exemplary embodiment provides a lithium secondary battery including a positive electrode; the negative electrode for a lithium secondary battery according to the present application; a separator between the positive electrode and the negative electrode; and an electrolyte.

[Advantageous Effects]

The manufacturing method of a negative electrode for a lithium secondary battery according to the exemplary embodiment of the present invention includes, in a process of performing pre-lithiation by transferring a lithium metal layer on top of a negative electrode active material layer or a negative electrode active material layer having a buffer layer laminated thereon, pretreating the surface of the negative electrode so that the lithium metal layer uniformly adheres to the top of the negative electrode active material layer or the negative electrode active material layer having the buffer layer laminated thereon.

As the surface of the negative electrode is pretreated (specifically, indirect atmospheric pressure plasma treatment) as described above, a surface property of the negative electrode is changed (hydrophilicity is increased), so that interface adhesion between the lithium metal layer and the negative electrode increases during transfer of the lithium metal layer, thereby preventing formation of by-products at the interface.

In addition, as the interface adhesion between the negative electrode and the lithium metal layer is improved as described above, the peelability of a transfer laminate for transfer is improved, and consequently, it is easy to dissipate the heat generated during pre-lithiation to the outside, resulting in suppressing by-product production in the pre-lithiation process and progressing a relatively uniform pre-lithiation process into the negative electrode active material layer.

[Brief Description of Drawings]

FIG. 1 shows a pre-lithiation method of a negative electrode for a lithium secondary battery according to an exemplary embodiment of the present application.
FIG. 2 shows a laminated structure of a lithium secondary battery according to an exemplary embodiment of the present application.

<Explanation of Reference Numerals and Symbols>

10: base layer
20: lithium metal layer
30: negative electrode active material layer
40: negative electrode current collector layer
50: separator
60: positive electrode current collector layer
70: positive electrode active material layer
100: transfer laminate
200: negative electrode for lithium secondary battery
300: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a manufacturing method of a negative electrode for a lithium secondary battery, the manufacturing method including the steps of: forming a negative electrode active material layer on one surface or both surfaces of a negative electrode current collector layer; pretreating the negative electrode active material layer; transferring a lithium metal layer to a surface of the pretreated negative electrode active material layer opposite to a surface in contact with the negative electrode current collector layer; and activating the lithium metal layer, in which the pretreating step is performed using a plasma treatment or corona treatment.

The manufacturing method of a negative electrode for a lithium secondary battery according to an exemplary embodiment of the present invention includes, in a process of performing pre-lithiation by transferring a lithium metal layer on top of a negative electrode active material layer, pretreating the top of the negative electrode active material layer so that the lithium metal layer uniformly adheres to the top of the negative electrode active material layer.

As the top of the negative electrode active material layer is pretreated (specifically, indirect atmospheric pressure plasma treatment) as described above, a surface property of the negative electrode active material layer is changed, so that interface adhesion between the lithium metal layer and the negative electrode active material layer increases during transfer of the lithium metal layer, thereby preventing formation of by-products at the interface. In addition, as the interface adhesion increases, the transferability of the lithium metal layer is also improved.

In the present application, in order to effectively attach (transfer) the lithium metal layer to the surface of the electrode, hydrophilicity should be imparted to the surface of the target to which the lithium metal layer is to be transferred, which can be achieved through the plasma treatment or corona treatment according to the present application.

Hereinafter, the manufacturing method of a negative electrode for a lithium secondary battery of the present application will be described in detail.

An exemplary embodiment of the present application provides a step of forming a negative electrode forming a negative electrode active material layer on one surface or both surfaces of a negative electrode current collector layer.

There is provided the manufacturing method of a negative electrode for a lithium secondary battery in which the step is a process of laminating (e.g., forming) a negative electrode for a lithium secondary battery, and the step of forming a negative electrode active material layer on one surface or both surfaces of the negative electrode current collector layer includes a step of coating a negative electrode slurry including a negative electrode active material layer composition on one surface or both surfaces of the negative electrode current collector layer, and the negative electrode active material layer composition includes one or more selected from the group consisting of a silicon-containing active material, a negative electrode conductive material, and a negative electrode binder.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, the negative electrode current collector layer may have a thickness of 1 um or greater and 100 um or less, and the negative electrode active material layer may have a thickness of 20 um or greater and 500 um or less.

However, the thicknesses may be variously modified depending on a type and use of the negative electrode used, and are not limited thereto.

In an exemplary embodiment of the present application, the negative electrode slurry may include a negative electrode active material layer composition, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, distilled water may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In an exemplary embodiment of the present application, the negative electrode active material layer composition may include one or more selected from the group consisting of a silicon-containing active material, a negative electrode conductive material, and a negative electrode binder.

In an exemplary embodiment of the present application, the silicon-containing active material may include one or more selected from the group consisting of SiOx (x=0), SiOx (0<x<2), SiC, and a Si alloy.

In an exemplary embodiment of the present application, the silicon-containing active material may include one or more selected from the group consisting of SiOx (x=0) and SiOx (0<x< 2), and may include the SiOx (x=0) in an amount of 70 parts by weight or more on the basis of 100 parts by weight of the silicon-containing active material.

In another exemplary embodiment, SiOx (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-containing active material.

In an exemplary embodiment of the present application, the silicon-containing active material may include a metal impurity.

The metal impurity is an impurity that may be included in silicon, and a content thereof may satisfy a range of 0.1 parts by weight or less on the basis of 100 parts by weight of the total silicon-containing active material.

In an exemplary embodiment of the present application, for the silicon-containing active material, pure silicon (Si) may be particularly used as the silicon-containing active material. The use of pure silicon (Si) as the silicon-containing active material may mean that, on the basis of 100 parts by weight of the total silicon-containing active material as described above, pure Si particles (SiOx (x=0)) not bonded to other particles or elements are included within the above range.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-containing negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, the negative electrode is pretreated before the pre-lithiation process so that, in the pre-lithiation process, during the lithium transfer process, lithium metal can be easily transferred from a transfer laminate, and lithium in the negative electrode active material layer can be uniformly pre-lithiated.

In addition, the present invention solves the problems of the related art in such a manner that while using only the silicon-containing active material as a negative electrode active material in order to improve the capacity performance, a composite of a binder of a specific condition and a conductive material bonded to the binder is used in order to address the problems of maintaining the conductive path and the combination of the conductive material, the binder, and the active material in relation to the volume expansion.

An average particle diameter (D50) of the silicon-containing active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-containing active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the silicon-containing active material generally has a characteristic BET surface area. The BET surface area of the silicon-containing active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET surface area is measured in accordance with DIN 66131 (using nitrogen).

In an exemplary embodiment of the present application, the silicon-containing active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-containing active material may be included in an amount of 60 parts by weight or more, on the basis of 100 parts by weight of the negative electrode active material layer composition.

In another exemplary embodiment, the silicon-containing active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the negative electrode active material layer composition.

The negative electrode composition according to the present application uses the specific conductive material and binder capable of controlling the volume expansion rate during charging and discharging even when the silicon-containing active material having a significantly high capacity is used within the above range. Accordingly, even when the silicon-containing active material is within the above range, the negative electrode composition does not degrade the performance of the negative electrode and has excellent output characteristics in charging and discharging.

In an exemplary embodiment of the present application, the silicon-containing active material may have a nonspherical shape and its sphericity (circularity) is, for example, 0.9 or less, for example, 0.7 to 0.9, for example 0.8 to 0.9, and for example 0.85 to 0.9.

In the present application, the sphericity is determined by Equation A-1, in which A is an area and P is a boundary line.

$$[\text{Equation A-1}]$$

$$4\pi A/P^2$$

In the related art, it is general to use only graphite-based compounds as the negative electrode active material. However, in recent years, as the demand for high-capacity batteries is increasing, attempts to mix and use silicon-containing compounds are increasing in order to increase capacity. However, the silicon-containing compounds have limitations in that the volume rapidly expands during the charging/discharging, resulting in damage to the conductive path formed in the negative electrode active material layer to degrade the performance of the battery. Therefore, a type of the negative electrode conductive material that is used together with the silicon-containing active material is important.

Accordingly, in an exemplary embodiment of the present application, the negative electrode conductive material may include one or more selected from the group consisting of a particulate conductive material, a linear conductive material, and a planar conductive material.

In an exemplary embodiment of the present application, the particulate conductive material refers to a conductive material that may be used so as to improve conductivity of the negative electrode and has conductivity without causing a chemical change. Specifically, the particulate conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, the particle diameter of the particulate conductive material may be 10 nm to 100 nm, preferably 20 nm to 90 nm, and more preferably 20 nm to 60 nm.

In an exemplary embodiment of the present application, the conductive material may include a planar conductive material.

The planar conductive material can improve conductivity by increasing surface contact between silicon particles in the negative electrode and at the same time suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2$/g or greater.

In another exemplary embodiment, the planar conductive material may have a BET specific surface area of 5 $m^2$/g or greater and 500$m^2$/ g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 20 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-containing active materials whose volume expansion of the electrode is very large due to charging and discharging, and the positive electrode conductive material serves to impart some conductivity while serving as a buffer when rollpressed, and is completely different from the negative electrode conductive material of the present invention in terms of configuration and role.

In addition, the negative electrode conductive material according to the present application is applied to a silicon-containing active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-containing active material as in the present invention, in terms of configuration and role.

In an exemplary embodiment of the present application, the planar conductive material that is used as the negative electrode conductive material described above has a different structure and role from those of the carbon-containing active material that is generally used as the negative electrode active material. Specifically, the carbon-containing active material that is used as the negative electrode active material may be artificial graphite or natural graphite, and refers to a material that is processed and used into a spherical or particulate shape so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-containing active material as an active material means that the carbon-containing active material is processed into a particulate or spherical shape and used as a material for storing or releasing lithium.

That is, in an exemplary embodiment of the present application, artificial graphite or natural graphite, which is a carbon-containing active material, may have a BET specific surface area that satisfies a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-containing active material. When such roles are satisfied, all of the general binders can be applied. Specifically, an aqueous binder may be used, and more specifically, a PAM-based binder may be used.

In an exemplary embodiment of the present application, the manufacturing method of a negative electrode for a lithium secondary battery may include a step of pretreating the negative electrode.

In this case, the pretreating of the negative electrode may include all steps of pretreating a surface of the negative electrode active material layer described above; or, when a buffer layer described below is formed on the surface of the negative electrode active material layer, pretreating the buffer layer.

That is, in the case of a negative electrode for a lithium secondary battery, a buffer layer described below may be formed on top of the negative electrode active material layer for smoother pre-lithiation, and the pretreating of the negative electrode may be a concept including pretreating the surface of the negative electrode active material layer on which the buffer layer is not formed, or pretreating a surface of the buffer layer formed on the negative electrode active material layer.

The manufacturing method of a negative electrode for a lithium secondary battery according to the present application may include a step of pretreating the surface of the negative electrode before the transfer process of the lithium metal layer, as described above. Through this, the adhesion between the interface of the negative electrode and the lithium metal layer is increased, so that, after laminating the lithium metal layer, the base layer used for a transfer laminate can be easily removed, and therefore, a defect phenomenon that the negative electrode part comes off can be suppressed. In addition, the above pretreatment process increases the uniformity of the interface between the lithium metal layer and the top of the negative electrode, thereby suppressing generation of lithium by-products during pre-lithiation and reducing an amount of lithium loss.

In an exemplary embodiment of the present application, there is provided the manufacturing method of a negative electrode for a lithium secondary battery in which the pretreating step is performed using a plasma treatment or corona treatment.

In an exemplary embodiment of the present application, there is provided the manufacturing method of a negative electrode for a lithium secondary battery in which the pretreating step is performed using a plasma treatment.

In an exemplary embodiment of the present application, there is provided the manufacturing method of a negative electrode for a lithium secondary battery in which the pretreating step is performed using an indirect atmospheric pressure plasma method.

The surface treatment method using the plasma may refer to a surface treatment method that changes a chemical bond of a material by using the high energy of ions or electrons in a plasma state. In general, the plasma treatment is largely divided into vacuum plasma and atmospheric pressure plasma, and the atmospheric pressure plasma has a feature that it can properly operate even in a non-vacuum environment by introducing a discharge system that does not use a vacuum system. The atmospheric pressure plasma includes methods such as dielectric barrier discharge (DBD), corona discharge, and arc discharge.

The plasma treatment varies greatly in treatment conditions depending on plasma equipment. Specifically, the indirect atmospheric pressure plasma according to the present application proceeds under atmospheric pressure conditions other than vacuum, and adjusting a difference in plasma intensity does not have a significant meaning. In general, the vacuum plasma tends to vary greatly in treatment effect depending on an amount of an injected gas, a frequency, and power. In contrast, the indirect atmospheric pressure plasma method has relatively little effect because it is performed under atmospheric pressure conditions, and in this case, it is more affected by the plasma treatment time, and the longer the time is, the higher the hydrophilicity of the surface of the plasma treatment target becomes.

In an exemplary embodiment of the present application, the dielectric barrier discharge (DBD) method includes a direct method and an indirect method. The direct method is a method of directly irradiating plasma to a treatment surface, and the indirect method is a method of generating plasma, and treating a surface with ions generated from the plasma by using a carrier gas. Since the indirect method does not generate an arcing phenomenon during plasma treatment, the above indirect method may be more suitable as a pretreatment method of an electrode for which a metal negative electrode current collector layer is used.

Meanwhile, a difference between the direct method and the indirect method may be a difference in the power used when generating plasma. For the direct method, about 50W to 200W of power is used, and for the indirect method, about 1kW to 10kW of power is used.

Specifically, in an exemplary embodiment of the present application, there is provided the manufacturing method of a negative electrode for a lithium secondary battery in which the pretreating step is performed using an atmospheric pressure plasma method. More specifically, the pretreating step may be performed using an indirect atmospheric pressure plasma method, and more specifically, an indirect dielectric barrier discharge (DBD) method.

In an exemplary embodiment of the present application, the plasma treatment may refer to a process of adjusting power to a range of 1 kW to 10 kW under a condition of a frequency of 50 kHz to 250 kHz in a plasma generating unit, causing $N_2$(700 slm) and CDA (28 slm) to flow for generation of plasma, and treating a surface of a manufactured negative electrode for a lithium secondary battery while causing the negative electrode to pass through the plasma at a speed of treatment of 1 m/min to 40 m/min.

When the above-described plasma treatment conditions are satisfied, appropriate hydrophilicity can be secured on the surface of the negative electrode to change a water contact angle, and accordingly, the transfer of the lithium metal layer can be easily performed.

Further, in an exemplary embodiment of the present application, the pretreating step is preferably performed using an indirect atmospheric pressure plasma method. In the present application in which a metal negative electrode current collector layer is used, the above-described effect can be obtained even using a direct atmospheric pressure plasma method. However, an arcing phenomenon may occur when the surface of the electrode is treated using the direct plasma method, and thus the surface of the negative electrode may be damaged, so that only a part of the lithium metal layer may be transferred.

In an exemplary embodiment of the present application, there is provided the manufacturing method of a negative electrode for a lithium secondary battery in which the indirect atmospheric pressure plasma method conveys plasma by using gas for plasma treatment, and the gas for plasma treatment includes nitrogen gas and 3% to 10% of oxygen gas as compared with the nitrogen gas.

The treatment method according to the present application may use plasma treatment. In this case, the plasma treatment is performed using gas for plasma treatment. That is, in the indirect plasma method, plasma is conveyed using the gas for plasma treatment, and in this case, nitrogen and oxygen (or clean dry air) are preferably used as the gas for plasma treatment.

In an exemplary embodiment of the present application, the gas for plasma treatment preferably includes nitrogen gas and oxygen gas, and includes 3% to 10% of oxygen gas as compared with nitrogen gas.

Even when the gas for plasma treatment does not include oxygen, drive is possible by oxygen in the atmosphere. However, when the oxygen gas is included within the range described above, treatment efficiency and reproducibility can be improved. In addition, oxygen and ozone radicals generated during plasma generation are adsorbed to a treatment part to increase hydrophilicity, or to form a hydroxyl group, which is a hydrophilic functional group, on a surface to be treated to increase the hydrophilicity of the surface.

That is, the manufacturing method according to the present application uses a plasma treatment method in order to form a surface having a hydrophilic group on the surface of the negative electrode so as to be suitable for the transfer of the lithium metal layer, and specifically, applies an indirect atmospheric pressure plasma treatment method of a dielectric barrier type in order to reduce damage to an electrode. For the minimum treatment for attaching the lithium metal layer, a frequency of the indirect atmospheric pressure plasma treatment method of the dielectric barrier type may be 50 kHz to 250 kHz, the power is adjusted to the range of 1 kW to 10 kW, and the treatment can be performed at a speed of 1 m/min to 40 m/min.

In this case, when the treatment time becomes longer, the surface hydrophilicity of the plasma treatment target becomes higher, as described above. Therefore, the treatment may be preferably performed at a speed of 1 m/min.

In an exemplary embodiment of the present application, there is provided the manufacturing method of a negative electrode for a lithium secondary battery in which a difference in a water contact angle on a surface of the negative electrode before and after the pretreatment is 10° or greater.

In another exemplary embodiment, the difference in the water contact angle on the surface of the negative electrode before and after the pretreatment may be 10° or greater, or 15° or greater, and 65° or less, and preferably 60° or less.

In this case, the difference in the water contact angle may refer to a difference in the water contact angle on a surface of the negative electrode active material layer or a difference in the water contact angle on a surface of the buffer layer.

By pretreating the surface of the negative electrode as described above, a difference of 10° or greater in the water contact angle on the surface of the negative electrode can be formed as compared with before the pretreatment. By modifying the water contact angle through the above process, it is possible to improve interface adhesiveness with the lithium metal layer later.

That is, the manufacturing method of a negative electrode for a lithium secondary battery according to an exemplary embodiment of the present application has the main object of changing only properties of an interface by a surface treatment of the negative electrode active material layer, not forming a separate layer on top of the negative electrode active material layer or changing the composition of the surface of the negative electrode active material layer.

Although the water contact angle on the surface of the negative electrode active material layer or the buffer layer cannot be generally defined because the surface energy value is different depending on the composition, the water contact angle before pretreatment on the surface of the negative electrode active material layer (water contact angle A before pretreatment on the surface of the negative electrode active material layer) may satisfy 40° to 50°, and the water contact angle after pretreatment (water contact angle B after pretreatment on the surface of the negative electrode active material layer) may satisfy 5° to 30°.

In addition, the water contact angle before pretreatment on the surface of the buffer layer (water contact angle A before pretreatment on the surface of the buffer layer) may be 110° to 130°, and the water contact angle after pretreatment (water contact angle B after pretreatment on the surface of the buffer layer) may be 60° to 110°.

In an exemplary embodiment of the present application, there is provided the manufacturing method of a negative electrode for a lithium secondary battery, which further includes a step of forming a buffer layer by coating a buffer layer composition on a surface of the negative electrode active material layer opposite to a surface of the negative electrode active material layer in contact with the negative electrode current collector layer, after the step of forming the negative electrode active material layer on one surface or both surfaces of the negative electrode current collector layer.

When the buffer layer is further included, lithium metal is prevented from directly contacting a highly reactive silicon-containing active material to suppress a rapid reaction even when lithium metal is transferred on top of the negative electrode active material layer, and a rate of pre-lithiation is regulated to uniformly pre-lithiate lithium in the negative electrode active material layer.

In an exemplary embodiment of the present application, a thickness of the buffer layer may satisfy a range of 0.1 um or greater and 2 um or less.

In another exemplary embodiment, the thickness of the buffer layer may satisfy a range of 0.1 um or greater and 2 um or less, preferably 0.2 um or greater and 1.5 um or less, and more preferably 0.5 um or greater and 1 um or less.

The buffer layer according to the present application has the above-described thickness range, so that the rate of pre-lithiation is regulated within an appropriate range to suppress generation of by-products and to enable uniform pre-lithiation within the negative electrode active material layer.

In an exemplary embodiment of the present application, the buffer layer composition may include one or more materials selected from the group consisting of an acrylic polymer and a binder.

In an exemplary embodiment of the present application, there is provided a negative electrode for a lithium secondary battery in which the acrylic polymer includes one or more selected from the group consisting of polyethylene (PE), polypropylene (PP), polyacrylic acid (PAA), and polyester.

In an exemplary embodiment of the present application, there is provided the negative electrode for a lithium secondary battery in which the binder included in the buffer layer composition includes a binder copolymer including a monomer containing a fluoro group, and the monomer includes a perfluoroolefin.

In an exemplary embodiment of the present application, the binder copolymer may include one or more various copolymers selected from the group consisting of polyvinylidene fluoride, polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber and poly acrylic acid.

In this case, in an exemplary embodiment of the present application, the binder copolymer includes a monomer containing a fluoro group.

In an exemplary embodiment of the present application, the description 'the binder copolymer includes a monomer containing a fluoro group' may mean that a monomer unit containing the fluoro group may be included in the copolymer as a monomer unit in a random, alternating or block form.

In an exemplary embodiment of the present application, the monomer containing a fluoro group may include C2-C8 fluoroolefin or perfluoroolefin such as tetrafluoroethylene (TFE), hexafluoropropylene (HFP), pentafluoropropylene and hexafluoroisobutylene.

Specifically, in an exemplary embodiment of the present application, the monomer including a fluoro group may be hexafluoropropylene (HFP).

The binder copolymer according to the present application may include the monomer in an amount of 5 parts by weight or more and 20 parts by weight or less, on the basis of 100 parts by weight of the binder copolymer.

In another exemplary embodiment, the monomer may be included in an amount of 5 parts by weight or more and 20 parts by weight or less, and preferably 8 parts by weight or more and 15 parts by weight or less, on the basis of 100 parts by weight of the binder copolymer.

The description 'the monomer is included in the above-described amount based on the binder copolymer' may mean a content of the monomer, based on the entire binder copolymer formed by reacting two or more monomers with each other.

The binder according to the present application has the above composition, so that the rate of pre-lithiation of lithium metal is appropriately regulated during pre-lithiation later, resulting in suppression of side reactions and prevention of breakage of the negative electrode active material particles.

In an exemplary embodiment of the present application, the binder copolymer may be polyvinylidene fluoride-hexafluoropropylene copolymer (PVDF-co-HFP).

In an exemplary embodiment of the present application, the buffer layer composition may include the binder described above.

In an exemplary embodiment of the present application, the manufacturing method of a negative electrode for a lithium secondary battery may include a step of transferring a lithium metal layer to the pretreated negative electrode.

This step corresponds to a step for pre-lithiation of the negative electrode by transferring the lithium metal layer on top of the negative electrode.

In an exemplary embodiment of the present application, there is provided the manufacturing method of a negative electrode for a lithium secondary battery in which the step of transferring the lithium metal layer onto a surface of the pretreated negative electrode opposite to a surface of the pretreated negative electrode in contact with the negative electrode current collector layer includes steps of preparing a transfer laminate including a base layer and a lithium metal layer provided on the base layer, laminating the transfer laminate on the negative electrode active material layer so that a surface of the lithium metal layer opposite to a surface in contact with the base layer comes into contact with a surface of the negative electrode active material layer opposite to a surface of the negative electrode active material layer in contact with the negative electrode current collector layer, and removing the base layer.

In an exemplary embodiment of the present application, the deposition method for depositing the lithium metal layer onto the base layer may be selected from evaporation deposition, chemical vapor deposition (CVD) and physical vapor deposition, but is not limited thereto, and various deposition methods that are used in the art may be used.

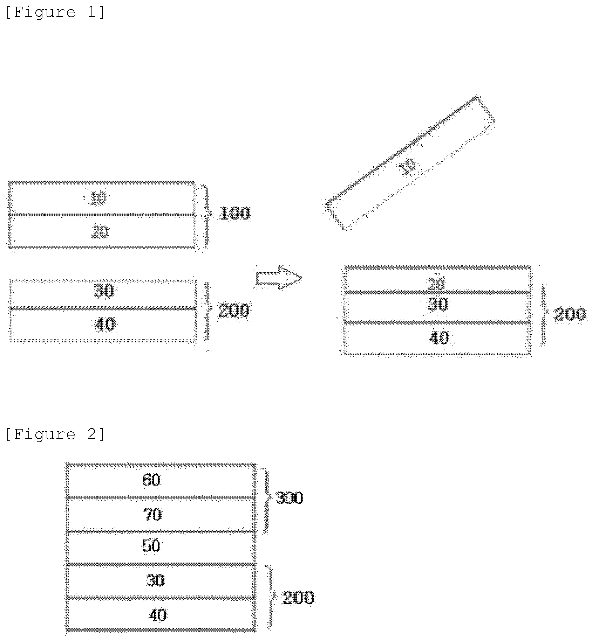

FIG. 1 shows a pre-lithiation method of a negative electrode for a lithium secondary battery according to an exemplary embodiment of the present application. Specifically, a process of preparing a transfer laminate 100 including a base layer 10 and a lithium metal layer 20, laminating the transfer laminate such that the lithium metal layer 20 comes into contact with a negative electrode active material layer 30 of a negative electrode 200 for a lithium secondary battery, in which the negative electrode active material layer 30 is formed on a negative electrode current collector layer 40, and then removing the base layer 10 to transfer only the lithium metal layer 20 on top of the negative electrode active material layer 30 is shown. FIG. 1 shows transferring a lithium metal layer on top of a negative electrode active material layer on which a buffer layer is not formed, and the same applies to a case where a buffer layer is additionally laminated.

In this case, the transfer process may be performed by roll pressing of applying a load of 100 kgf to 800 kgf to the negative electrode for a lithium secondary battery on which the transfer laminate is laminated. Thereafter, a process of removing the base layer is included, and upon removal, as the top of the negative electrode according to the present application is pretreated, the interface characteristics between the pretreated negative electrode and the lithium metal layer are improved, so that the lithium metal layer can be easily transferred.

In an exemplary embodiment of the present application, the base layer can be used without limitation as long as it has features capable of withstanding process conditions such as high temperature in the step of depositing the lithium metal layer, and preventing a reverse peeling problem that the lithium metal layer is transferred onto the base layer during a winding process for transferring the deposited lithium metal layer.

Specifically, in an exemplary embodiment of the present application, the base layer may be one or more selected from the group consisting of polyethylene terephthalate (PET), polyimide (PI), poly(methylmethacrylate)(PMMA), polypropylene, polyethylene and polycarbonate.

In an exemplary embodiment of the present application, a thickness of the base layer may be 1 um or greater and 300 um or less, and may satisfy a range of 5 um or greater and 200 um or less, and 10 um or greater and 100 um or less.

In an exemplary embodiment of the present application, a thickness of the lithium metal layer may be 1 um or greater and 10 um or less, and preferably may satisfy a range of 3 um or greater and 10 um or less.

When the thicknesses of the base layer and the lithium metal layer satisfy the above range, the transfer of the lithium metal to the negative electrode active material layer can occur efficiently and the reverse transfer can be prevented.

In an exemplary embodiment of the present application, there is provided the manufacturing method of a negative electrode for a lithium secondary battery in which a release layer is further included on a surface in contact with the base layer and lithium metal layer of the transfer laminate in order to improve peelability of the lithium metal layer and to secure transferability to the negative electrode active material layer.

In this case, in an exemplary embodiment of the present application, releasing force between the base layer and the release layer may satisfy a range of 50 gf/inch or higher and 1,000 gf/inch or lower, more specifically 60 gf/inch or higher and 900 gf/inch or lower, and further specifically 70 gf/inch or higher and 800 gf/inch or lower.

That is, the base layer may have a release layer formed on at least one surface, or may have release layers formed on both surfaces. The release layer makes it possible to prevent a reverse peeling problem that the lithium metal layer is transferred onto the base layer during a winding process for transferring the deposited lithium metal layer to the negative electrode, and also makes it possible to easily separate the base layer after transferring the lithium metal layer onto the negative electrode active material layer.

In particular, the interface adhesion between the interface of the negative electrode active material layer and the lithium metal layer is improved due to the plasma treatment effect of the negative electrode active material layer described above, so that the release layer according to the present application can be used without limitation in a case where the releasing force is low or high.

The release layer may include one or more species selected from the group consisting of silicon-modified polyester in which a silicon chain is graft-linked to a polyester main chain, an acrylic resin, Si, melamine, and fluorine.

In an exemplary embodiment of the present application, the release layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, a pre-lithiation process may proceed from the step of laminating and transferring the lithium metal layer onto the negative electrode, which may be referred to as a pre-lithiation reaction due to the high reactivity of the lithium metal layer before an activation process.

In an exemplary embodiment of the present application, a step of activating the transferred lithium metal layer may be included.

As described above, due to the high reactivity of the lithium metal layer, a reaction of lithium metal can proceed as soon as the lithium metal comes into contact with the top of the negative electrode. This is a reaction before an activating step, and thereafter, a step of removing the base layer and activating lithium to progress pre-lithiation can be defined as an activating step.

There is provided the manufacturing method of a negative electrode for a lithium secondary battery in which in the step of activating the lithium metal, an activation reaction occurs within 30 minutes to 3 hours under conditions of 25°C and 1 atm.

The activating step is a step of setting a condition for diffusing lithium metal into the negative electrode active material layer, and whether the pre-lithiation is completed can be determined depending on whether lithium on top of the metal layer has completely disappeared.

In an exemplary embodiment of the present application, the activation reaction time may be 30 minutes to 3 hours, and preferably 1 hour to 2 hours. That is, unlike the related art, the negative electrode active material layer is pretreated according to the present application, and accordingly, lithium can be uniformly transferred throughout the negative electrode active material layer.

In an exemplary embodiment of the present application, there is provided a negative electrode for a lithium secondary battery including a negative electrode current collector layer; and a negative electrode active material layer provided on one surface or both surfaces of the negative electrode current collector layer, in which the negative electrode for a lithium secondary battery satisfies Equation 1 below.

[Equation 1]

$$10° \leq A-B \leq 60°$$

in Equation 1,
'A' refers to a water contact angle on a surface of the negative electrode before pretreatment of the negative electrode, and 'B' refers to a water contact angle on the surface of the negative electrode after pretreatment of the negative electrode.

In the case of the negative electrode for a lithium secondary battery as described above, the negative electrode is pretreated as described above, and the water contact angle before and after the pretreatment satisfies the above range.

In an exemplary embodiment of the present application, there is provided a negative electrode for a lithium secondary battery manufactured by the manufacturing method of a negative electrode for a lithium secondary battery according to the present application.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 shows a laminated structure of a lithium secondary battery according to an exemplary embodiment of the present application. Specifically, a negative electrode 200 for a lithium secondary battery including the negative electrode active material layer 30 on one surface of the negative electrode current collector layer 40 can be seen, a positive electrode 300 for a lithium secondary battery including a positive electrode active material layer 70 on one surface of a positive electrode current collector layer 60 can be seen, and the negative electrode 200 for a lithium secondary battery and the positive electrode 300 for a lithium secondary battery are formed in a laminated structure with a separator 50 interposed therebetween.

The negative electrode for a lithium secondary battery according to the present application has such a feature that, as described above, the pre-lithiation has been progressed with a lithium metal layer transferred on top of the negative electrode pretreated as described above.

In this case, the pre-lithiated negative electrode can be compared through a SEM picture, and specifically, a degree of particle breakage in the SEM picture can be expressed as a ratio through an image analysis.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector layer and a positive electrode active material layer formed on the positive electrode current collector layer and including the positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 um, and a surface of the positive electrode current collector layer may be formed with microscopic irregularities to enhance adhesion of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-containing material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more selected from the group consisting of F$^-$, Cl$^-$, I$^-$, NO$_3^-$, N(CN)$_2^-$, BF$_4^-$, ClO$_4^-$, PF$_6^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$, CF$_3$CF$_2$SO$_3^-$, (CF$_3$SO$_2$)$_2$N$^-$, (FSO$_2$)$_2$N$^-$, CF$_3$CF$_2$(CF$_3$)$_2$CO$^-$, (CF$_3$SO$_2$)$_2$CH$^-$, (SF$_5$)$_3$C$^-$, (CF$_3$SO$_2$)$_3$C$^-$, CF$_3$(CF$_2$)$_7$SO$_3^-$, CF$_3$CO$_2^-$, CH$_3$CO$_2^-$, SCN$^-$ and (CF$_3$CF$_2$SO$_2$)$_2$N$^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Examples>

### <Manufacture of Transfer Laminate>

A laminate (available from i-One Film Co., Ltd.) coated with an acrylic resin in a level of 1 um as a release layer on a polyethylene terephthalate base layer was prepared. Lithium metal was deposited on the release layer of the laminate to form a lithium metal layer having a thickness of 6 um by thermal evaporation, thereby preparing a transfer laminate. In this case, EWK-060 available from ULVAC, Inc. was used as the deposition apparatus, and the deposition process was performed under conditions of the speed of 2.5 m/min, the temperature of the lithium supply unit of 500°C, and the temperature of the main roll of -25°C.

### <Example 1>

### <Manufacture of Negative Electrode>

Si (average particle diameter (D50): 3.5 $\mu$m) serving as a silicon-containing active material, Denka black serving as a conductive material, SBR serving as a binder, and CMC serving as a thickener were added to distilled water serving as a solvent for forming a negative electrode slurry in a weight ratio of 80:15.8:3:1.2 to manufacture a negative electrode slurry (solid concentration: 25 wt.%).

As a mixing method, the conductive material, the binder, the thickener, and the water were dispersed at 2500 rpm for 30 minutes by using a homo mixer, and then the active material was added and dispersed therein at 2500 rpm for 30 minutes to manufacture a slurry.

The negative electrode slurry was coated on both surfaces of a copper current collector (thickness: 8 um) serving as a negative electrode current collector with a loading amount of 85 mg/25 cm$^2$, roll-pressed, and dried in a vacuum oven at 130°C for 10 hours to form a negative electrode active material layer (thickness: 33 pm), which was prepared as a negative electrode (thickness of negative electrode: 41 um, porosity of negative electrode: 40.0%).

### <Example 1>

Using the manufactured electrode, the negative electrode was applied to a plasma generating unit, in which N$_2$ (700 slm) and CDA (28 slm) were caused to flow for generation of plasma under conditions of 250 kHz (7.2 kW (4.3 kV)), and the negative electrode was caused to pass through the plasma at a speed of 1 m/minute to perform an indirect plasma treatment on a surface of the negative electrode active material layer. In this case, N$_2$ was used to generate the plasma and also served as a carrier gas that conveyed ions generated by the plasma to the electrode part. That is, in the indirect plasma method, the plasma should be conveyed by the carrier gas, and thus, a larger amount of N$_2$ than that in the direct plasma method was included.

Thereafter, in order to transfer the transfer laminate to the negative electrode active material layer, the lithium metal layer of the transfer laminate was placed on top of the negative electrode active material layer, which was then subjected to roll-pressing while applying a load of 40 kgf/cm. The lithium releasing force of the transfer laminate was about 70 to 80 gf/inch. In this case, the temperature was set to the room temperature (25°C), the PET layer of the transfer laminate was removed immediately after lamination, and the negative electrode was subjected to pre-lithiation.

### <Example 2>

The negative electrode was pre-lithiated in the same manner as in Example 1, except that the speed of plasma treatment on the surface of the negative electrode was set to 20 m/min.

### <Example 3>

The negative electrode was pre-lithiated in the same manner as in Example 1, except that the speed of plasma treatment on the surface of the negative electrode was set to 40 m/min.

### <Example 4>

The negative electrode was pre-lithiated in the same manner as in Example 1, except that N$_2$ (700 slm) and CDA (28 slm) were caused to flow for generation of plasma under plasma treatment conditions on the surface of the negative electrode of 60 kHz (3.1 kW (5.5 kV)), and the negative electrode was caused to pass through the plasma at a speed of 1 m/minute for treatment.

**<Example 5>**

The negative electrode was pre-lithiated in the same manner as in Example 4, except that the speed of plasma treatment on the surface of the negative electrode was set to 20 m/min.

**<Example 6>**

The negative electrode was pre-lithiated in the same manner as in Example 4, except that the plasma treatment rate on the surface of the negative electrode was set to 40 m/min.

**<Example 7>**

The negative electrode was pre-lithiated in the same manner as in Example 1, except that the lithium releasing force of the transfer laminate was adjusted to about 700 to 800 gf/inch.

**<Example 8>**

With respect to the negative electrode manufactured in the manufacture of the negative electrode of the above manufacture example, the buffer layer composition slurry was bar-coated on top of the negative electrode active material layer to form a buffer layer to have a thickness of 0.5 $\mu$m to 2 $\mu$m after drying. In this case, a composition including PVDF-HFP was used as the buffer layer composition.

Thereafter, in the plasma generating unit, $N_2$ (700 slm) and CDA (28 slm) were caused to flow for generation of plasma under conditions of the frequency of 250 kHz (7.2 kW (4.3 kV)), and the negative electrode was caused to pass through the plasma at a speed of 1 m/minute to perform an indirect plasma treatment on the surface. In this case, $N_2$ was used to generate the plasma and also served as a carrier gas that conveyed ions generated by the plasma to the electrode part. That is, in the indirect plasma method, the plasma should be conveyed by the carrier gas, and thus, a larger amount of $N_2$ than that in the direct plasma method was included.

Thereafter, in order to transfer the transfer laminate to the negative electrode active material layer, the lithium metal layer of the transfer laminate was placed on top of the negative electrode active material layer, which was then subjected to roll-pressing while applying a load of 40 kgf/cm. The lithium releasing force of the transfer laminate was about 70 to 80 gf/inch. In this case, the temperature was set to the room temperature (25°C), the PET layer of the transfer laminate was removed immediately after lamination, and the negative electrode was subjected to pre-lithiation.

**<Example 9>**

The negative electrode was pre-lithiated in the same manner as in Example 8, except that the speed of plasma treatment on the surface of the negative electrode was set to 20 m/min.

**<Example 10>**

The negative electrode was pre-lithiated in the same manner as in Example 8, except that the speed of plasma treatment on the surface of the negative electrode was set to 40 m/min.

**<Example 11>**

The negative electrode was pre-lithiated in the same manner as in Example 8, except that $N_2$ (700 slm) and CDA (28 slm) were caused to flow for generation of plasma under plasma treatment conditions on the surface of the negative electrode of 60 kHz (3.1 kW (5.5 kV)), and the negative electrode was caused to pass through the plasma at a speed of 1 m/minute for treatment.

**<Example 12>**

The negative electrode was pre-lithiated in the same manner as in Example 11, except that the speed of plasma treatment on the surface of the negative electrode was set to 20 m/min.

**<Example 13>**

The negative electrode was pre-lithiated in the same manner as in Example 11, except that the speed of plasma treatment on the surface of the negative electrode was set to 40 m/min.

**<Example 14>**

The negative electrode was pre-lithiated in the same manner as in Example 8, except that the lithium releasing force of the transfer laminate was adjusted to about 700 to 800 gf/inch.

**<Comparative Example 1>**

The negative electrode was pre-lithiated in the same manner as in Example 1, except that the surface of the negative electrode was not subjected to the plasma treatment.

**<Comparative Example 2>**

The negative electrode was pre-lithiated in the same manner as in Example 7, except that the surface of the negative electrode was not subjected to the plasma treatment.

**<Comparative Example 3>**

The negative electrode was pre-lithiated in the same manner as in Comparative Example 1, except that the lithium releasing force of the transfer laminate was adjusted to about 700 to 800 gf/inch.

The surface water contact angles before and after pretreatment in Examples 1 to 14 and Comparative Examples 1 to 3 are shown in Table 1 below. The water contact angle was measured using a POENIX-MT (SEO Co., Ltd.) apparatus, and the results shown in Table 1 below show the average values after repeating the measurement three times per sample of each condition.

[Table 1]

| | Water contact angle on surface of negative electrode before pretreatment (A, °) | Water contact angle on surface of negative electrode after pretreatment (B, °) | Transfer state of lithium metal layer |
|---|---|---|---|
| Example 1 | 46.6±2.6 | 11.0±2.3 | Whole transfer |
| Example 2 | 46.6±2.6 | 17.4±1.8 | Whole transfer |
| Example 3 | 46.6±2.6 | 24.0±2.2 | Whole transfer |
| Example 4 | 46.6±2.6 | 13.811.8 | Whole transfer |
| Example 5 | 46.6±2.6 | 19.0±1.6 | Whole transfer |
| Example 6 | 46.6±2.6 | 23.410.4 | Whole transfer |
| Example 7 | 46.6±2.6 | 11.0±2.3 | Whole transfer |
| Example 8 | 121.911.1 | 64.5±1.8 | Whole transfer |
| Example 9 | 121.911.1 | 106.110.8 | Whole transfer |
| Example 10 | 121.9±1.1 | 106.0±0.7 | Whole transfer |
| Example 11 | 121.9±1.1 | 69.3±1.0 | Whole transfer |
| Example 12 | 121.9±1.1 | 105.8±3.1 | Whole transfer |
| Example 13 | 121.9±1.1 | 105.7±1.2 | Whole transfer |
| Example 14 | 121.9±1.1 | 64.5±1.8 | Whole transfer |
| Comparative Example 1 | 46.6±2.6 | 46.6±2.6 | Partial transfer |
| Comparative Example 2 | 121.9±1.1 | 121.9±1.1 | Partial transfer |
| Comparative Example 3 | 46.6±2.6 | 46.6±2.6 | Partial transfer |

In Table 1, Examples 1 to 7 show the water contact angles according to the surface plasma treatment on the negative electrode active material layer, and Examples 8 to 14 show the water contact angles according to the surface plasma treatment on the buffer layer.

From the test results in Table 1, it can be confirmed that there was a difference in the transferability characteristics of the lithium metal layer depending on whether the plasma treatment was performed on the negative electrode active material layer, and that the transferability was maintained even though a change in contact angle was less than 20° due to the greatly increased speed of plasma treatment.

Specifically, this can be confirmed when comparing Examples 1 to 3, Examples 4 to 6, Examples 8 to 10, and Examples 11 to 13. Each case shows the change in the water contact angle according to the speed of plasma treatment, and it can be confirmed that the slower the plasma treatment was performed, the longer the time, the higher the hydrophilicity of the surface of the plasma treatment target, and consequently, the larger the difference in the water contact angle.

Illustratively, in comparison with Example 1, the speed of plasma treatment (40 m/min) in Example 3 was greatly increased, and thus the change in the water contact angle was relatively small. However, it can be confirmed that the transfer characteristics of the lithium metal layer were also excellent in this case.

Additionally, in Examples 1 and 4, the frequency condition of the plasma treatment was changed, and there was some difference in the water contact angle. However, it can be confirmed that the difference in the speed of plasma treatment caused a large difference in the water contact angle.

In addition, when comparing Examples 1 and 7, it can be confirmed that lithium was transferred well after plasma treatment in both cases where the releasing force of the release layer was low (70 to 80 gf/inch) and high (700 to 800 gf/inch). This results from the improved adhesion due to the plasma treatment effect at the interface of the negative electrode active material layer and the interface of the lithium metal layer, and it can be confirmed that the transfer occurred well regardless of the releasing force of the transfer laminate.

**<Lithium loss calculation experiment after pre-lithiation>**

In order to confirm the loss of lithium transferred after pre-lithiation, a half bi-cell type battery was manufactured using the negative electrode (for which the pre-lithiation process was performed) prepared in Table 1 and a lithium metal foil (10 um) as a counter electrode. For the electrolyte used in this battery, fluoro ethylene carbonate (FEC)/ethyl methyl carbonate (EMC) (=3/7 (volume ratio)) in which 1M $LiPF_6$ was dissolved was used.

In order to measure the lithium loss, an amount of pre-lithiated lithium was measured as a difference between first charging capacity values of the non pre-lithiated electrode and the pre-lithiated electrode, and the loss of lithium was calculated as a ratio of the capacity of pre-lithiated lithium to the theoretical capacity of lithium.

A calculation expression thereof is Equation A-2 below, and the results are shown in Table 2.

lithium loss (%) = 1-{ ("charging capacity of non pre- lithiated electrode" - "charging capacity of pre-lithiated electrode)/ theoretical capacity of lithium used during pre-lithiation}     [Equation A-2]

[Table 2]

|  | Capacity of pre-lithiated lithium (mAh/cm$^2$) | Lithium loss (%) |
|---|---|---|
| Example 1 | 1.08 | 15.0 |
| Example 2 | 1.07 | 15.8 |
| Example 3 | 1.04 | 18.1 |
| Example 4 | 1.07 | 15.8 |
| Example 5 | 1.07 | 15.8 |
| Example 6 | 1.05 | 17.3 |
| Example 7 | 1.07 | 15.7 |
| Example 8 | 1.14 | 10.2 |
| Example 9 | 1.12 | 11.8 |
| Example 10 | 1.15 | 9.4 |
| Example 11 | 1.12 | 11.8 |

(continued)

|  | Capacity of pre-lithiated lithium (mAh/cm$^2$) | Lithium loss (%) |
|---|---|---|
| Example 12 | 1.14 | 10.2 |
| Example 13 | 1.14 | 10.2 |
| Example 14 | 1.12 | 11.8 |
| Comparative Example 1 | 0.78 | 38.6 |
| Comparative Example 2 | 0.2 | 59.1 |
| Comparative Example 3 | 0.40 | 68.5 |

It can be confirmed that in Examples 1 to 14, the lithium metal layer was wholly transferred on top of the negative electrode active material layer, and thus the measured lithium loss amount was less than 20%, indicating a good level, whereas in Comparative Examples 1 to 3 in which partial transfer was made, the lithium loss amount was very high.

That is, as can be seen in Tables 1 and 2, it can be confirmed that as the top of the negative electrode is pretreated as in Examples 1 to 14, the interface adhesion between the negative electrode active material layer and the lithium metal layer is improved, and the peelability of the transfer laminate for transfer is improved, and consequently, it is easy to dissipate the heat generated during the pre-lithiation to the outside, resulting in suppressing by-product production in the pre-lithiation process and progressing a relatively uniform pre-lithiation process into the negative electrode active material layer.

## Claims

1. A manufacturing method of a negative electrode for a lithium secondary battery, the manufacturing method comprising:

   forming a negative electrode by forming a negative electrode active material layer on one surface or both surfaces of a negative electrode current collector layer;
   pretreating the negative electrode;
   transferring a lithium metal layer to the pretreated negative electrode; and
   activating the lithium metal layer,
   wherein the pretreating is performed using a plasma treatment or corona treatment.

2. The manufacturing method of claim 1, wherein the forming of the negative electrode active material layer on one surface or both surfaces of the negative electrode current collector layer comprises coating a negative electrode slurry comprising a negative electrode active material layer composition on one surface or both surfaces of the negative electrode current collector layer,
   wherein the negative electrode active material layer composition comprises one or more selected from the group consisting of a silicon-containing active material, a negative electrode conductive material, and a negative electrode binder.

3. The manufacturing method of claim 1, wherein the pretreating is performed using an indirect atmospheric pressure plasma method.

4. The manufacturing method of claim 3, wherein in the indirect atmospheric pressure plasma method, plasma is conveyed using gas for plasma treatment, and
   wherein the gas for plasma treatment comprises nitrogen gas, and 3% to 10% of oxygen gas as compared with the nitrogen gas.

5. The manufacturing method of claim 3, wherein in the indirect atmospheric pressure plasma method, a frequency is 50 kHz to 250 kHz, a power is 1 kW to 10 kW, and a speed of treatment satisfies a range of 1 m/minute to 40 m/minute.

6. The manufacturing method of claim 1, further comprising forming a buffer layer by coating a buffer layer composition on a surface of the negative electrode active material layer opposite to a surface of the negative electrode active material layer in contact with the negative electrode current collector layer, after forming the negative electrode active material layer on one surface or both surfaces of the negative electrode current collector layer.

7. The manufacturing method of claim 1, wherein in the activating of the lithium metal layer, an activation reaction occurs within 30 minutes to 3 hours under conditions of 25°C and 1 atm.

8. The manufacturing method of claim 1, wherein the transferring of the lithium metal layer to the pretreated negative electrode comprises:

preparing a transfer laminate comprising a base layer and a lithium metal layer on the base layer,
laminating the transfer laminate on the negative electrode active material layer such that a surface of the lithium metal layer opposite to a surface in contact with the base layer comes into contact with a surface of the negative electrode active material layer opposite to a surface of the negative electrode active material layer in contact with the negative electrode current collector layer, and
removing the base layer.

9. The manufacturing method of claim 8, wherein the transfer laminate further comprises a release layer on a surface in contact with the base layer and lithium metal layer.

10. The manufacturing method of claim 1, wherein a difference in a water contact angle on a surface of the negative electrode before and after the pretreating is 10° or greater.

11. The manufacturing method of claim 2, wherein the silicon-containing active material comprises one or more selected from the group consisting of SiOx (x=0), SiOx (0<x<2), SiC, and a Si alloy.

12. The manufacturing method of claim 2, wherein the silicon-containing active material comprises one or more selected from the group consisting of SiOx (x=0) and SiOx (0<x≤ 2), and comprises the SiOx (x=0) in an amount of 70 parts by weight or more on a basis of 100 parts by weight of the silicon-containing active material.

13. The manufacturing method of claim 1, wherein a thickness of the lithium metal layer is 1 um or greater and 10 um or less.

14. A negative electrode for a lithium secondary battery comprising:

a negative electrode current collector layer; and
a negative electrode active material layer on one surface or both surfaces of the negative electrode current collector layer,
wherein the negative electrode for a lithium secondary battery satisfies Equation 1 below:

$$[\text{Equation 1}]$$

$$10° \leq A-B \leq 60°$$

in Equation 1,

'A' refers to a water contact angle on a surface of the negative electrode before a pretreatment of the negative electrode, and
'B' refers to a water contact angle on the surface of the negative electrode after the pretreatment of the negative electrode.

15. A lithium secondary battery comprising:

a positive electrode;
a negative electrode for a lithium secondary battery manufactured according to the manufacturing method of any one of claims 1 to 13;
a separator between the positive electrode and the negative electrode; and
an electrolyte.

[Figure 1]

[Figure 2]

## INTERNATIONAL SEARCH REPORT

| International application No. |
| --- |
| **PCT/KR2023/001579** |

**A. CLASSIFICATION OF SUBJECT MATTER**

**H01M 4/134**(2010.01)i; **H01M 4/04**(2006.01)i; **H01M 4/62**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/134(2010.01); C23C 14/14(2006.01); H01G 11/22(2013.01); H01M 10/04(2006.01); H01M 10/052(2010.01); H01M 10/42(2006.01); H01M 4/139(2010.01); H01M 4/1393(2010.01); H01M 4/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium battery), 음극(anode), 플라즈마(plasma), 전사(transfer), 버퍼층(buffer layer), 물 접촉각(water contact angle)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2020-187975 A (ULVAC JAPAN LTD.) 19 November 2020 (2020-11-19)<br>See paragraphs [0002]-[0004], [0017]-[0022], [0040] and [0044]; and figures 1 and 2. | 1-13,15 |
| A | | 14 |
| Y | JP 2013-020974 A (PANASONIC CORP.) 31 January 2013 (2013-01-31)<br>See paragraphs [0030]-[0032], [0049], [0050], [0057] and [0062]; and figure 5. | 1-13,15 |
| Y | JP 2013-157121 A (NAGANO AUTOMATION KK) 15 August 2013 (2013-08-15)<br>See paragraphs [0013] and [0028]-[0037]; and claim 6. | 3-5,10 |
| Y | KR 10-2022-0011590 A (LG ENERGY SOLUTION, LTD.) 28 January 2022 (2022-01-28)<br>See paragraph [0090]; and claim 1. | 6 |
| X | KR 10-2013-0084457 A (SAMSUNG SDI CO., LTD.) 25 July 2013 (2013-07-25)<br>See example 1; comparative example 1; claim 7; and table 4. | 14 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 May 2023** | **12 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/001579**

| Patent document cited in search report | | | Publication date (day/month/year) | Patent family member(s) | | | Publication date (day/month/year) |
|---|---|---|---|---|---|---|---|
| JP | 2020-187975 | A | 19 November 2020 | JP | 7217663 | B2 | 03 February 2023 |
| JP | 2013-020974 | A | 31 January 2013 | JP | 2007-273459 | A | 18 October 2007 |
| | | | | JP | 5151188 | B2 | 27 February 2013 |
| | | | | JP | 5476612 | B2 | 23 April 2014 |
| JP | 2013-157121 | A | 15 August 2013 | None | | | |
| KR | 10-2022-0011590 | A | 28 January 2022 | CN | 114365312 | A | 15 April 2022 |
| | | | | EP | 4016669 | A1 | 22 June 2022 |
| | | | | KR | 10-2460812 | B1 | 03 November 2022 |
| | | | | US | 2022-0359867 | A1 | 10 November 2022 |
| | | | | WO | 2022-019630 | A1 | 27 January 2022 |
| KR | 10-2013-0084457 | A | 25 July 2013 | KR | 10-1733744 | B1 | 25 May 2017 |
| | | | | US | 2013-0183590 | A1 | 18 July 2013 |
| | | | | US | 9012074 | B2 | 21 April 2015 |

Form PCT/ISA/210 (patent family annex) (July 2022)

**EP 4 379 853 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220014548
- JP 2009080971 A